Europäisches Patentamt

European Patent Office

Office européen des brevets

(11) Veröffentlichungsnummer: **0 108 241**
**A1**

(12) **EUROPÄISCHE PATENTANMELDUNG**

(21) Anmeldenummer: 83109750.6

(22) Anmeldetag: 29.09.83

(51) Int. Cl.³: **A 01 G 31/02**
**A 01 G 27/00**

(30) Priorität: 30.10.82 DE 3240269

(43) Veröffentlichungstag der Anmeldung:
16.05.84 Patentblatt 84/20

(84) Benannte Vertragsstaaten:
AT BE CH FR GB IT LI NL SE

(71) Anmelder: Zeischegg, Walter
Blumenscheinweg 10
D-7900 Ulm(DE)

(72) Erfinder: Zeischegg, Walter
Blumenscheinweg 10
D-7900 Ulm(DE)

(72) Erfinder: Brüssing, Bernd
Bilharzstrasse 3
D-7900 Ulm-Lehr(DE)

(74) Vertreter: Fay, Hermann, Dipl.-Phys. Dr. et al,
Ensingerstrasse 21 Postfach 1767
D-7900 Ulm (Donau)(DE)

(54) Pflanzengefäss, insbesondere für Hydrokultur.

(57) Das Pflanzengefäß ist insbesondere für Hydrokultur vorgesehen und weist einen Wurzelraum und einen außerhalb des Wurzelraumes angeordneten Vorratsbehälter für Flüssigkeit auf, der mit dem Inneren des Pflanzengefäßes über ein Ventil verbunden ist. Der Ventilsitz ist am Vorratsbehälter angeordnet und der Ventilteller wird von einem durch den Flüssigkeitsstand im Pflanzenbehälter gesteuerten Schwimmer betätigt. Der Schwimmer (5) ist mit einer senkrecht nach oben weisenden Schwimmerspindel (5.1) versehen, die durch die Ventilöffnung des Ventilsitzes (3.1) in den Vorratsbehälter (2) vorsteht und den Ventilteller (3.2) trägt, dessen Abstand gegenüber dem Schwimmer verstellbar und in der jeweiligen Einstellung feststellbar ist.

Fig. 1

Walter Zeischegg
Blumenscheinweg 10
7900 Ulm

7900 Ulm, 16.09.83
Akte E/6029 sr

- 1 -

## Pflanzengefäß, insbes. für Hydrokultur

Die Erfindung betrifft ein Pflanzengefäß, insbesondere für Hydrokultur, mit einem Wurzelraum und einem außerhalb des Wurzelraumes angeordneten selbständigen Vorratsbehälter für Flüssigkeit, der mit dem Innern des Pflanzengefäßes über ein Ventil verbunden ist, wobei der Ventilsitz am Vorratsbehälter angeordnet und der Ventilteller von einem durch den Flüssigkeitsstand im Pflanzengefäß gesteuerten Schwimmer betätigt ist.

Bei einem aus der DE-OS 25 54 108 bekannten Pflanzenkübel ist der Ventilteller an einem Hebelarm angeordnet, welcher an einer Wand des Pflanzengefäßes angelenkt ist und an seinem freien Ende den Schwimmter trägt. Bei Erniedrigung des Flüssigkeitsstandes im Wurzelraum sinkt der Schwimmer und hebt über den Arm den Ventilteller vom Ventilsitz ab, so daß Flüssigkeit aus dem Vorratsbehälter in das Pflanzengefäß nachströmen kann. Auf diese Weise wird für eine im wesentlichen konstante Füllhöhe im Pflanzengefäß gesorgt.

Adresse: 79 Ulm/Donau,
Postfach 1209, Ensingerstraße 21

Telefon
(07 31) 6 49 46

Telegramme
Prospat Ulmdonau

Postscheckkonto

Bankkonto

- 2 -

Soweit für einzelne Pflanzensorten unterschiedliche Füllhöhen für deren optimales Gedeihen wünschenswert sind und insbesondere die Füllhöhe dem von der Jahreszeit abhängigen Wasserbedarf der einzelnen Pflanze angepaßt werden soll, bietet dieses bekannte Pflanzengefäß dafür keine Möglichkeit. Dazu müßte das Gefäß zerlegt werden und beispielsweise der Schwimmer gegen einen entsprechend anders geformten ausgetauscht werden. Zwar ist in einer anderen Ausführungsform der DE-OS 25 54 108 eine Niveauregulierung vorgesehen, jedoch setzt dies einen luftdicht abgeschlossenen Vorratsbehälter voraus, der in der Herstellung aufwendig ist und der im übrigen das Nachfüllen von Vorratsflüssigkeit erheblich erschwert.

Bei einem aus der DE-AS 23 64 868 bekannten Pflanzengefäß ist die Anordnung des Wurzelraumes so getroffen, daß das maximale Flüssigkeitsniveau im Pflanzengefäß immer unterhalb des Wurzelraums liegt, wobei der Flüssigkeitstransport durch ein sich durch den Wurzelraum in das Pflanzengefäß erstreckendes Rohr bewirkt wird, das außen einen kapillaraktiven und somit flüssigkeitsleitenden Schlauch trägt. Das Nachfüllen von Flüssigkeit in das Pflanzengefäß geschieht durch das Innere des Rohres, welches ferner mit einem Innenflansch versehen ist, der einen Ventilsitz für einen im Rohr befindlichen Schwimmer bildet. Der Schwimmer wirkt als Absperrventil, indem er mit seinem oberen Ende den Ventilsitz von unten her abdichtet und dadurch ein Überfüllen des Pflanzengefäßes verhindert. Schließlich ist der Schwimmer mit einer Stange versehen, die aus dem oberen Ende des Rohres herausragt, so daß dadurch das Absinken des Flüssigkeitsspiegels im Pflanzengefäß
zu beobachten ist. Diese Anordnung ist jedoch nicht
geeignet, das Flüssigkeitsniveau im Pflanzengefäß
auf einen vorgegebenen Wert zu regeln; insbesondere
fehlt dazu ein das automatische Nachfüllen des Pflanzengefäßes ermöglichender Vorratsbehälter.

Der Erfindung liegt die Aufgabe zugrunde, ein Pflanzengefäß der eingangs genannten Art so auszubilden,
daß die Füllstandshöhe im Pflanzengefäß leicht eingestellt und verändert werden kann, wobei auch das Nachfüllen von Flüssigkeit in den Vorratsbehälter in einfacher Weise möglich sein soll.

Diese Aufgabe wird nach der Erfindung dadurch gelöst,
daß der Schwimmer mit einer senkrecht nach oben weisenden Schwimmerspindel versehen ist, die durch die
Ventilöffnung des Ventilsitzes in den Vorratsbehälter
vorsteht und den Ventilteller trägt, dessen Abstand
gegenüber dem Schwimmer verstellbar und in der jeweiligen Einstellung feststellbar ist.

Der durch die Erfindung erreichte Fortschritt besteht
im wesentlichen darin, daß die gewünschte Füllstandshöhe in einfacher Weise allein durch axiale Verstellung des Ventiltellers gegenüber dem Schwimmer einstell- und veränderbar ist. In bevorzugter Ausführungsform steht die Schwimmerspindel nach außen aus dem
Vorratsbehälter heraus und ermöglicht von außen her
die axiale Verstellung des Ventiltellers gegenüber dem
Schwimmer, ohne daß dazu die Pflanzen aus dem Gefäß
entnommen oder das Ventil geöffnet oder der Vorratsbehälter zuvor entleert werden müßten.

- 4 -

In einer besonders zweckmäßigen und daher im Rahmen der Erfindung bevorzugten Ausführungsform ist die Schwimmerspindel von einer Spindelhülse umgeben und der Ventilteller endseitig an die Spindelhülse angeschlossen, wobei die Spindelhülse auf der Schwimmerspindel axial verschieb- und feststellbar ist. Dadurch ergibt sich eine besonders einfache Führung des Ventiltellers auf der Schwimmerspindel, wobei zugleich das Problem der Abdichtung zwischen Ventilteller und Schwimmerspindel entfällt, sofern die Spindelhülse so lang ausgebildet ist, daß sie mit ihrem oberen Ende aus der Flüssigkeit im Vorratsbehälter herausragt. In einer weiter bevorzugten Ausführungsform weist die Spindelhülse an dem dem Ventilteller abgewandten Ende eine Klemmvorrichtung auf, durch welche die Schwimmerspindel in der Spindelhülse festklemmbar ist. Somit kann der Abstand zwischen dem Schwimmer und dem Ventilteller und dementsprechend die Höhe des Flüssigkeitsspiegels im Pflanzengefäß bequem stufenlos eingestellt werden. Um diese Einstellung einfach kontrollieren und die Füllhöhe überwachen zu können, ist es von Vorteil, wenn die Schwimmerspindel und die Spindelhülse nach oben den Vorratsbehälter überragen. Dabei empfiehlt es sich, daß die überragenden Enden in ein dem Pflanzengefäß aufgesetztes Schauglas vorstehen, um Beschädigungen bzw. Behinderungen der Schwimmerspindel und der Spindelhülse zu vermeiden.

Ferner ist es günstig, wenn der Schwimmer von einer mit dem Vorratsbehälter verbundenen hülsenförmigen Schwimmerführung umgeben ist. Dabei verhindert die Schwimmerführung, die mit Durchbrüchen zum Niveauaus-

- 5 -

gleich mit dem Pflanzengefäß versehen ist, zugleich
eine Verschmutzung des Ventils durch z. B. abgestorbene Wurzelreste der Pflanze, insbesondere dann, wenn
die Durchbrüche auf dem Wurzelraum abgewandter Seite
angeordnet sind.

Von Vorteil ist insbesondere, wenn der Vorratsbehälter den Wurzelraum umfangseitig umgibt, da dann der
Vorratsbehälter ein relativ großes Volumen erhält,
ohne die Pflanzenfläche des Wurzelraumes störend zu
beeinträchtigen und das Pflanzengefäß plump oder unförmig erscheinen zu lassen. Eine besonders einfache
Handhabung des Pflanzengefäßes wird dadurch erreicht,
daß das Pflanzengefäß etwa auf Höhe des Ventilsitzes
im wesentlichen horizontal zweigeteilt ist. Das Oberteil kann im oberen Randbereich einen radial nach
innen vorstehenden Vorsprung aufweisen, welchem ein
den Wurzelraum bildender Pflanzentopf mit einem nach
außen vorspringenden oberen Rand aufliegt. Somit kann
die Pflanze in dem Pflanzentopf dem Pflanzengefäß entnommen werden, so daß anschließend nach Abheben des
Oberteils und gegebenenfalls nach Entfernen der Schwimmerführung der Schwimmer und das Ventil beispielsweise
zu einer Reinigung frei zugänglich sind. Wenn dabei im
übrigen der Vorratsbehälter auf Distanzstücken im Unterteil des Pflanzengefäßes steht, deren Länge entsprechend der Schwimmerhöhe und des Schwimmerspiels
bemessen ist, so kann auch der Vorratsbehälter für
sich dem Pflanzengefäß entnommen werden. Es besteht
auch die Möglichkeit, das Oberteil des Pflanzengefäßes
einstückig mit einem den Wurzelraum bildenden Pflanzen-

- 6 -

topf auszubilden.

Schließlich ist es von Vorteil, wenn der Boden des Pflanzengefässes jedenfalls unterhalb des Wurzelraumes eben oder leicht zum Wurzelraum hin nach oben gewölbt, unterhalb des Schwimmers dagegen in Form einer Tasche vertieft so ausgebildet ist, daß der Schwimmer in seiner abgesenkten Stellung von der Tasche ganz oder teilweise aufgenommen ist. Dann besteht die Möglichkeit, den Flüssigkeitsstand im Pflanzengefäß soweit abzusenken, daß sich unterhalb des Wurzelraumes keine Flüssigkeit mehr befindet, sondern in die Tasche abläuft, was beispielsweise auch dann wünschenswert sein kann, wenn Pflanzen in Erdkultur in das Pflanzengefäß eingesetzt werden, bei denen zur Vermeidung von Fäulnis der Pflanzentopf nicht in die Flüssigkeit eintauchen darf. Somit befindet sich nur noch in der Tasche Flüssigkeit, wobei die Tasche zweckmäßigerweise sich ringartig entlang des Umfanges des Pflanzengefässes erstrecken kann. Trotz dieses sehr niedrigen Flüssigkeitsstandes vermag der in die Tasche und damit in die Flüssigkeit eintauchende Schwimmer seine Regelfunktion auch dann noch auszuüben.

Im folgenden wird die Erfindung an Hand zweier in der Zeichnung dargestellter Ausführungsbeispiele näher erläutert; es zeigen:

Fig. 1 einen Axialschnitt durch das Planzengefäß nach der Erfindung längs B - B nach Fig. 2

Fig. 2 eine Draufsicht auf das Pflanzengefäß, teilweise im Schnitt längs A - A nach Fig. 1 dargestellt,

- 7 -

Fig. 3 den Vorratsbehälter des Pflanzengefässes als
selbständigen Gefäßeinsatz,

Fig. 4 den Gefäßeinsatz nach Fig. 3 bei entleertem Vorratsbehälter,

Fig. 5 den Gegenstand nach Fig. 3, jedoch bei niedriger
eingestelltem Flüssigkeitsstand,

Fig. 6 den Gegenstand nach Fig. 5 bei entleertem Vorratsbehälter.

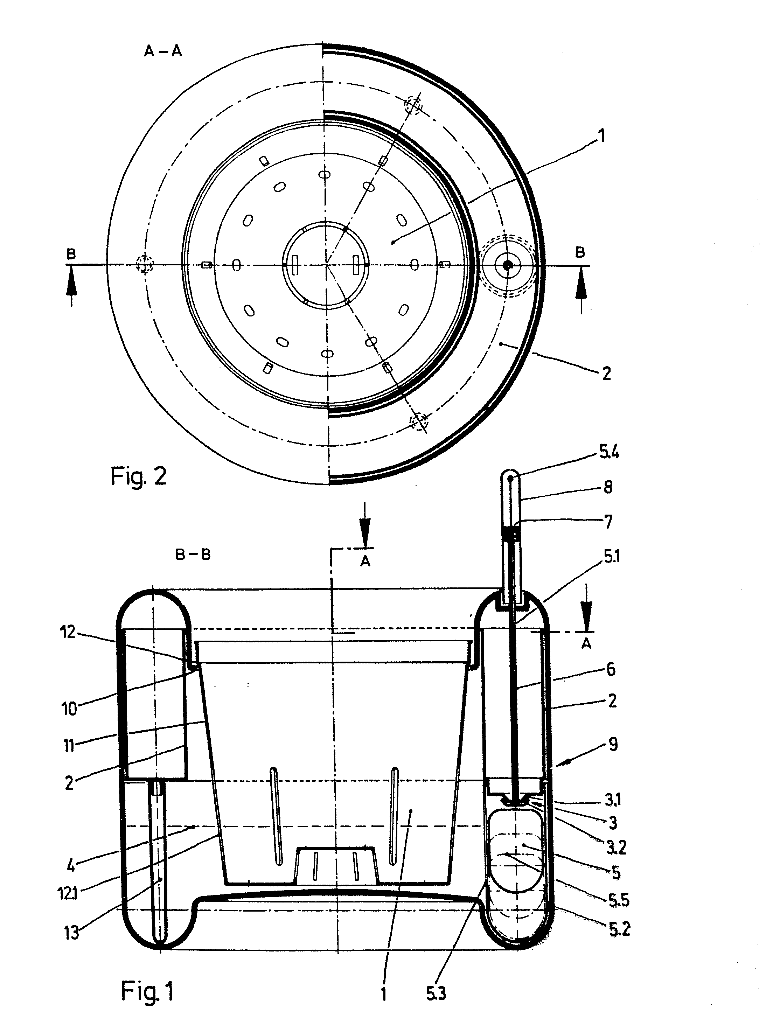

Das Pflanzengefäß besteht gemäß Fig. 1 und 2 seinem wesentlichen Aufbau nach aus einem Wurzelraum 1 und einem
außerhalb des Wurzelraumes angeordneten Vorratsbehälter 2
für Flüssigkeit. Das Innere des Pflanzengefässes ist mit
dem Vorratsbehälter 2 über ein Ventil 3 verbunden, wobei
der Ventilsitz 3.1 am Vorratsbehälter 2 angeordnet ist.
Der Ventilteller 3.2 wird von einem durch den Flüssigkeitsstand 4 im Wurzelraum 1 gesteuerten Schwimmer 5
betätigt. Dazu ist der Schwimmer 5 mit einer senkrecht
nach oben weisenden Schwimmerspindel 5.1 versehen,
die durch die Ventilöffnung des Ventilsitzes 3.1 in
den Vorratsbehälter 2 hinein und durch ihn hindurch nach
außen ragt. Der Ventilteller 3.2 selbst ist auf der
Schwimmerspindel 5.1 axial verstellbar und in der jeweiligen Einstellung feststellbar angeordnet. Dazu
dient eine die Schwimmerspindel 5.1 umgebende Spindelhülse 6, an welcher der Ventilteller 3.2 endseitig an
die Spindelhülse 6 angeschlossen ist. Die Spindelhülse
6 ist auf der Schwimmerspindel 5.1 axial verschiebbar
und weist an ihrem dem Ventilteller 3.2 abgewandten

- 8 -

Ende eine Klemmvorrichtung 7 auf, durch welche die Schwimmerspindel 5.1 in der Spindelhülse 6 festklemmbar ist. Die Länge der Schwimmerspindel 5.1 und der Spindelhülse 6 ist so gewählt, daß beide den Vorratsbehälter 2 nach oben überragen. Zum Schutz gegen mechanische Beschädigung stehen die überragenden Enden in ein dem Pflanzengefäß aufgesetztes Schauglas 8 vor. Der Schwimmer 5 ist von einer mit dem Vorratsbehälter 2 verbundenen hülsenförmigen Schwimmerführung 5.2 umgeben, die mit einer oder mehreren Ausnehmungen 5.3 für den Niveauausgleich mit dem Pflanzengefäß versehen ist.

Solange in dem Vorratsbehälter 2 Flüssigkeit vorhanden ist und im übrigen im Pflanzengefäß hinsichtlich der Flüssigkeitszufuhr ein stationärer Zustand eingetreten ist, befindet sich die Spindelhülse 6 in der in Fig. 1 dargestellten Stellung, d. h, das Ventil 3 wird durch den Schwimmer 5 geschlossen gehalten. Sobald der Flüssigkeitsspiegel 4 im Pflanzengefäß abfällt, wird das Ventil 3 durch den absinkenden Schwimmer 5 geringfügig geöffnet, so daß die aus dem Vorratsbehälter 2 nachströmende Flüssigkeit für ein konstantes Flüssigkeitsniveau im Pflanzengefäß sorgt. Erst wenn der Vorratsbehälter 2 leer ist wird daher der Schwimmer 5 und mit ihm die Spindelhülse 6 absinken, so daß das von außen sichtbare Absinken der Klemmvorrichtung 7 darauf aufmerksam macht, den Vorratsbehälter 2 erneut zu füllen.

Die in Fig. 1 dargestellte relative Einstellung von Schwimmerspindel 5.1 zur Spindelhülse 6 führt im Wurzelraum 1 zu einer maximalen Füllstandshöhe. Diese Füllstandshöhe ist ebenfalls von außen erkennbar durch
das Maß, um welches das Ende 5.4 der Schwimmerspindel
5.1 die Klemmvorrichtung 7 überragt. Bei Einstellung
einer minimalen Füllstandshöhe befindet sich der
Schwimmer in der gestrichelt zu unterst dargestellten und mit 5.5 gekennzeichneten Lage, wobei der Schwimmer 5 gerade noch so viel Spiel hat, wie zum Öffnen des
Ventiles 3 notwendig ist. In diesem Fall ragt das Ende
5.4 der Schwimmerspindel 5.1 kaum noch aus der Klemmvorrichtung hervor und zeigt damit die niedrig eingestellte Füllstandshöhe an. Das kugelförmig verdickte
Ende 5.4 der Schwimmerspindel 5.1 verbessert dabei nicht
nur deren Sichtbarkeit, sondern kann zugleich als Anschlag an der Klemmvorrichtung 7 dienen und somit das
erforderliche minimale Schwimmerspiel gewährleisten.

Der Vorratsbehälter 2 kann, wie im Ausführungsbeispiel der
Fig.1 u. 2 den Wurzelraum längs dessen Umfanges umgeben, wobei
das Pflanzengefäß kreisrunde, rechteckige, quadratische
oder andere Form aufweisen kann. Das Pflanzengefäß ist
in horizontaler Ebene etwa auf Höhe des Ventilsitzes
bei 9 zweigeteilt, so daß das Oberteil abnehmbar ist.
Ferner weist das Oberteil einen radial nach innen vorstehenden Vorsprung 10 auf, welchem ein den Wurzelraum
1 bildender Pflanzentopf 11 mit seinem nach außen vorspringenden oberen Rand 12 aufliegt, so daß der Pflanzentopf 11 ohne weiteres aus dem Pflanzengefäß entnommen werden kann. Im übrigen ist der Pflanzentopf 11
mit Ausnehmungen 12.1 für den Durchtritt der Flüssigkeit versehen. Nach Abnehmen des Oberteils und Entfernen der Schwimmerführung 5.2 ist das Ventil frei zugänglich und kann leicht einer gegebenenfalls notwendigen Reinigung unterzogen werden. Der Vorratsbehälter 2 ist auf seiner Unterseite mit Distanzstücken 13 versehen, mit welchen er im Unterteil des Pflanzengefäßes steht, wobei die Distanz entsprechend der Höhe des Schwimmers und des notwendigen Schwimmerspiels bemessen ist.

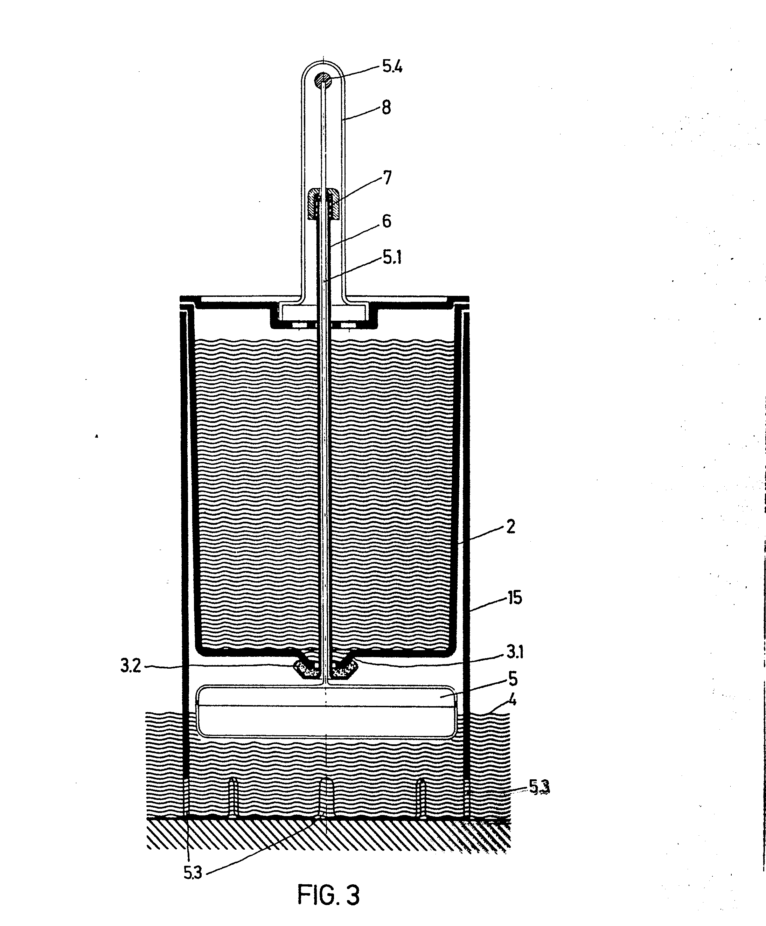

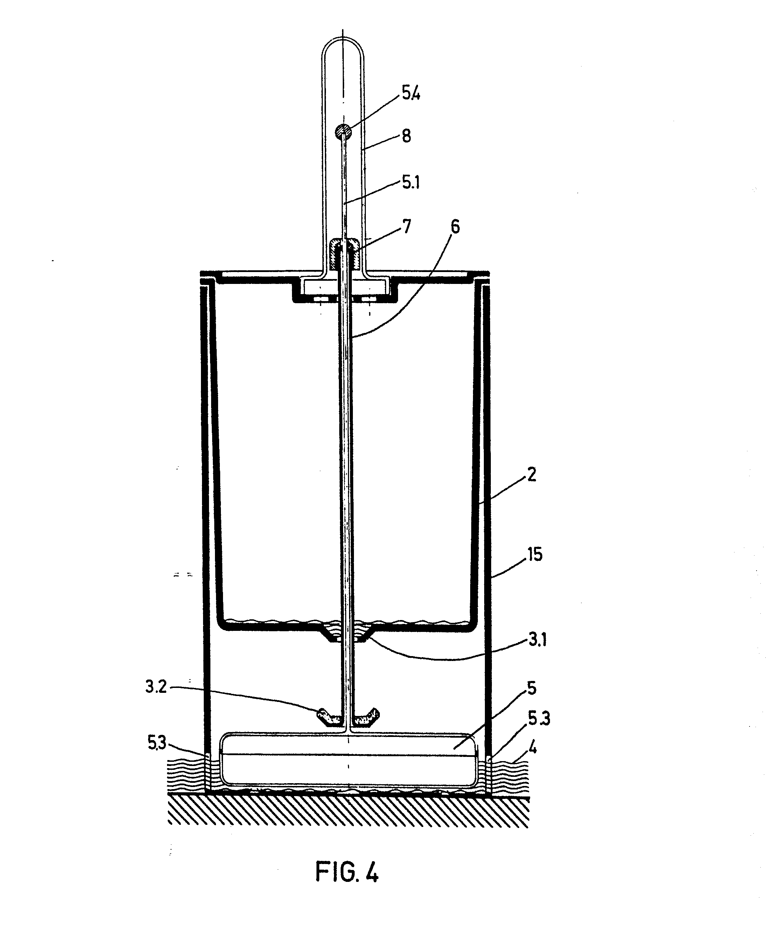

In dem Ausführungsbeispiel nach den Figuren 3 bis 6 ist der Vorratsbehälter 2 als selbständiger Einsatz für ein Pflanzengefäß ausgebildet und dazu von einer Behälteraufnahme 15 umgeben, die an ihrem unteren Rand mit den Ausnehmungen 5.3 versehen ist, so daß ein Flüssigkeitsniveauausgleich mit dem nicht näher dargestellten, großflächigen Pflanzengefäß, in welches der Einsatz eingestellt wird, erfolgen kann. In den Fig. 3 und 4 ist ein hoher Flüssigkeitsstand eingestellt, was von außen an dem weit über die Klemmvorrichtung 7 hervorstehenden Ende 5.4 der Schwimmerspindel 5.1 erkennbar ist. Bei entleertem Vorratsbehälter 2 sinken die Klemmvorrichtung 7 und das Ende 5.4 gemeinsam gemäß Fig. 4 mit dem fallenden Flüssigkeitsstand 4 ab und erinnern an das Auffüllen des Vorratsbehälters 2.

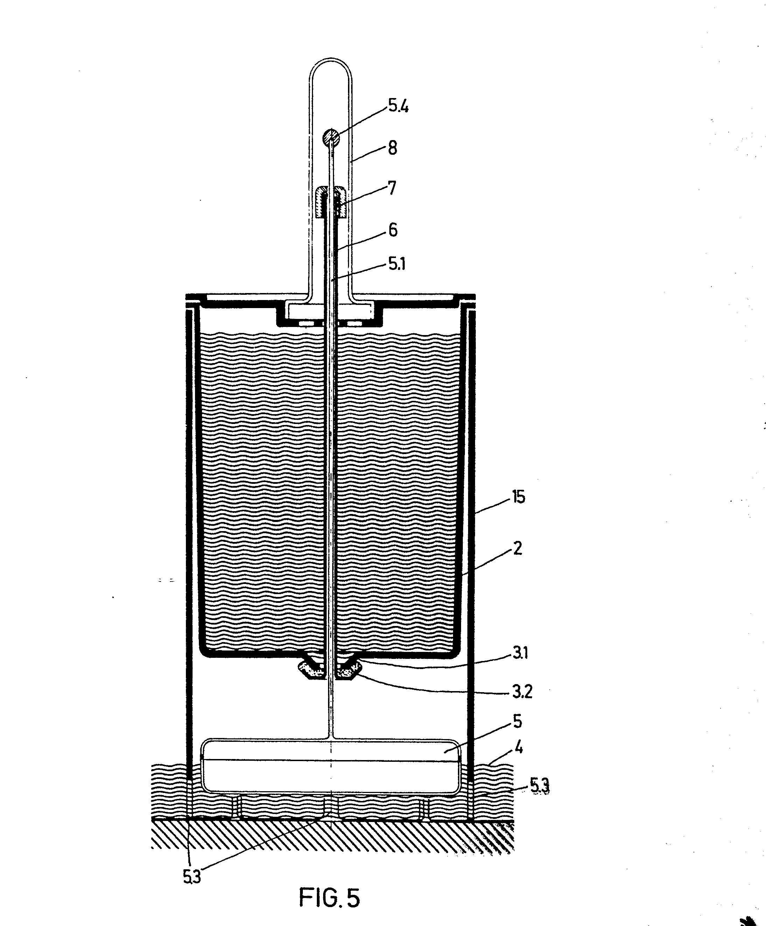

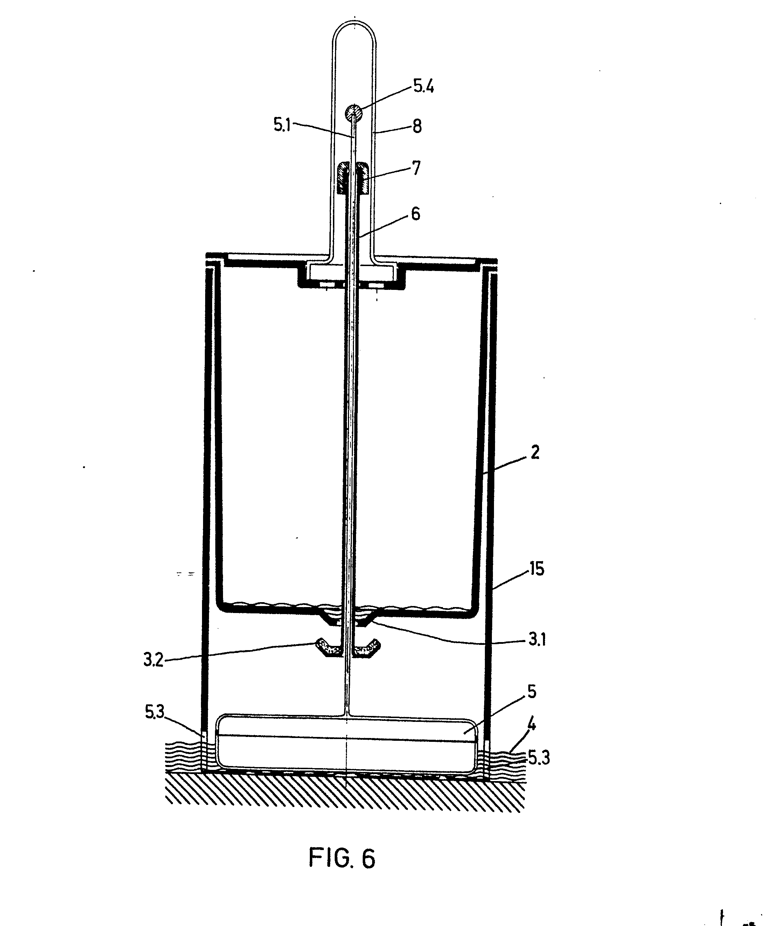

In den Fig. 5 und 6, die im übrigen den Fig. 3 und 4 entsprechen, ist durch gegenseitiges Verschieben von Spindelhülse 6 und Schwimmerspindel 5.1 ein niedriger Flüssigkeitsstand eingestellt; von außen wieder erkennbar an dem geringeren Abstand der Klemmvorrichtung 7 vom Ende 5.4 der Schwimmerspindel 5.1

PATENTANWALT DIPL.-PHYS. DR. HERMANN FAY

0108241

Walter Zeischegg
Blumenscheinweg 10
7900 Ulm

7900 Ulm, 16.09.83
Akte E/6029 sr

- 1 -

Ansprüche:

1. Pflanzengefäß, insbesondere für Hydrokultur, mit einem Wurzelraum und einem außerhalb des Wurzelraumes angeordneten selbständigen Vorratsbehälter für Flüssigkeit, der mit dem Inneren des Pflanzengefäßes über ein Ventil verbunden ist, wobei der Ventilsitz am Vorratsbehälter angeordnet und der Ventilteller von einem durch den Flüssigkeitsstand im Pflanzengefäß gesteuerten Schwimmer betätigt ist, dadurch gekennzeichnet, daß der Schwimmer (5) mit einer senkrecht nach oben weisenden Schwimmerspindel (5.1) versehen ist, die durch die Ventilöffnung des Ventilsitzes (3.1) in den Vorratsbehälter (2) vorsteht und den Ventilteller (3.2) trägt, dessen Abstand gegenüber dem Schwimmer verstellbar und in der jeweiligen Einstellung feststellbar ist.

2. Pflanzengefäß nach Anspruch 1, dadurch gekennzeichnet, daß die Schwimmerspindel (5.1) nach außen aus dem Vorratsbehälter (2) vorsteht und von außen her die axiale Verstellung des Ventiltellers (5.1) gegenüber dem Schwimmer (5) ermöglicht.

3. Pflanzengefäß nach Anspruch 1 oder 2, dadurch gekennzeichnet, daß die Schwimmerspindel (5.1) von einer Spindelhülse (6) umgeben ist und der Ventilteller (3.2) endseitig an die Spindelhülse (6) angeschlossen ist, wobei die Spindelhülse (6) auf der Schwimmerspindel (5.1) axial verschieb- und feststellbar ist.

4. Pflanzengefäß nach Anspruch 3, dadurch gekennzeichnet, daß die Spindelhülse (6) an dem dem Ventilteller (3.2) abgewandten Ende eine Klemmvorrichtung (7) aufweist, durch welche die Schwimmerspindel (5.1) in der Spindelhülse (6) festklemmbar ist.

5. Pflanzengefäß nach Anspruch 3 oder 4, dadurch gekennzeichnet, daß die Schwimmerspindel (5.1) und die Spindelhülse (6) nach oben den Vorratsbehälter überragen.

6. Pflanzengefäß nach Anspruch 5, dadurch gekennzeichnet, daß die überragenden Enden in ein dem Pflanzengefäß aufgesetztes Schauglas (8) vorstehen.

7. Pflanzengefäß nach einem der Ansprüche 1 bis 6, dadurch gekennzeichnet, daß der Schwimmer (5) von einer mit dem Vorratsbehälter (2) verbundenen hülsenförmigen Schwimmerführung (5.2) umgeben ist.

- 3 -

8. Pflanzengefäß nach einem der Ansprüche 1 bis 7, dadurch gekennzeichnet, daß der Vorratsbehälter (2) den Wurzelraum (1) umfangseitig umgibt.

9. Pflanzengefäß nach einem der Ansprüche 1 bis 8, dadurch gekennzeichnet, daß das Pflanzengefäß etwa auf Höhe des Ventilsitzes (3.1) im wesentlichen horizontal zweigeteilt ist.

10. Pflanzengefäß nach Anspruch 9, dadurch gekennzeichnet, daß das Oberteil des Pflanzengefäßes einen radial nach innen vorstehenden Vorsprung (10) aufweist, welchem ein den Wurzelraum (1) bildender Pflanzentopf (11) mit seinem nach außen vorspringenden oberen Rand (12) aufliegt.

11. Pflanzengefäß nach Anspruch 9, dadurch gekennzeichnet, daß das Oberteil des Pflanzengefäßes einstückig mit einem den Wurzelraum bildenden Pflanzentopf (11) ausgebildet ist.

12. Pflanzengefäß nach einem der Ansprüche 1 bis 11, dadurch gekennzeichnet, daß der Vorratsbehälter (2) auf Distanzstücken (13) im Unterteil des Pflanzengefäßes steht, deren Länge entsprechend der Schwimmerhöhe und des Schwimmerspiels bemessen ist.

13. Pflanzengefäß nach einem der Ansprüche 1 - 12, dadurch gekennzeichnet, daß der Boden des Pflanzengefässes jedenfalls unterhalb des Wurzelraumes (1) eben oder leicht zum Wurzelraum (1) hin gewölbt, unterhalb des Schwimmers (5) dagegen in Form einer

- 4 -

Tasche (14) vertieft so ausgebildet ist, daß der Schwimmer (5) in seiner abgesenkten Stellung von der Tasche (14) ganz oder teilweise aufgenommen ist.

14. Pflanzengefäß nach Anspruch 13, dadurch gekennzeichnet, daß die Tasche sich ringartig entlang des Umfangs des Pflanzengefäßes erstreckt.

A–A

Fig. 2

B–B

Fig. 1

0108241

2/5

FIG. 3

FIG. 4

0108241

FIG. 5

FIG. 6

0108241

Europäisches
Patentamt

**EUROPÄISCHER RECHERCHENBERICHT**

Nummer der Anmeldung

EP 83 10 9750

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,A | DE-B-2 364 868 (AB HUSQVARNA BORSTFABRIK)<br>* Ganzes Dokument * | 1,2,7 | A 01 G 31/02<br>A 01 G 27/00 |
| D,A | DE-A-2 554 108 (H. BUNGARD)<br>* Figuren 1, 2 * | 1 | |
| A | BE-A- 875 132 (P.A.M. SMEYERS)<br>* Seite 4; Figur 1 * | 1 | |
| A | DE-U-7 439 280 (H.-P. SCHUMACHER)<br>* Seite 10, Zeilen 11-21; Figur 1 * | 6 | |

RECHERCHIERTE SACHGEBIETE (Int. Cl. 3)

A 01 G 27/00
A 01 G 31/00
A 01 G 31/02

Der vorliegende Recherchenbericht wurde für alle Patentansprüche erstellt.

| Recherchenort | Abschlußdatum der Recherche | Prüfer |
|---|---|---|
| BERLIN | 12-01-1984 | SCHOFER |